# EUROPEAN PATENT SPECIFICATION

(11) **EP 1 513 677 B1**
(45) Date of publication and mention of the grant of the patent: **06.11.2013**
(21) Application number: 03757431.6
(22) Date of filing: 06.06.2003
(51) Int. Cl.: B32B 25/10, B32B 27/02, B32B 27/34

(54) **MULTI-LAYER MATERIAL ADAPTED TO DISSIPATE AND REDUCE VIBRATIONS**
ZUR ABFÜHRUNG UND VERRINGERUNG VON SCHWINGUNGEN AUSGELEGTES MEHRSCHICHTIGES MATERIAL
MATERIAU MULTICOUCHE CONCU POUR DISSIPER ET REDUIRE DES VIBRATIONS

(30) Priority: 07.06.2002 US 165748; 17.06.2002 US 173063; 17.01.2003 US 346954; 07.02.2003 US 360353
(43) Date of publication of application: 16.03.2005
(73) Proprietor: Matscitechno Licensing Company, Kennett Square, PA 19348 (US)
(72) Inventor: VITO, Robert, A., Berwyn, PA 19312 (US); FALONE, Thomas, Mickelton, NJ 08056 (US); DIMARIO, Carmen, West Chester, PA 19382 (US)
(74) Representative: Lippert, Stachow & Partner
(86) International application number: PCT/US2003/018073
(87) International publication number: WO 2003/103949

(56) References cited:
- EP-A- 0 374 597
- WO-A-91/00966
- WO-A-03/018144
- WO-A-03/032762
- WO-A-03/066174
- US-A- 4 217 705
- US-A- 4 483 972
- US-A- 4 983 242
- US-A- 5 319 867
- US-A- 5 759 113
- DATABASE WPI Week 198711 Derwent Publications Ltd., London, GB; AN 1987-075332 XP002472565 & JP 62 027143 A (MARUGO GUM KOGYO KK) 5 February 1987 (1987-02-05)

## Description

CROSS REFERENCE TO RELATED APPLICATIONS

This application is a Patent Cooperation Treaty application that claims priority to the following four U. S. Patent Applications : [1] U. S. patent application 10/173,063, filed on June 17,2002; [2] U. S. Patent Application 10/165, 748, filed on June 7,2002; [3] U. S. Patent Application 10/346,954, filed on January 17,2003; and [4] U. S. Patent Application 10/360,353, filed on February 7,2003.

BACKGROUND

The present invention is directed to a material adapted to reduce vibration and, more specifically, to a multi-layer material adapted to dissipate and evenly distribute vibrations transmitted to one side of the material.

Handles of sporting equipment, bicycles, hand tools, etc. are often made of wood, metal or polymer that transmit vibrations that can make the items uncomfortable for prolonged gripping. Sporting equipment, such as bats, balls, shoe insoles and sidewalls, also transmit vibrations during the impact that commonly occurs during athletic contests. These vibrations can be problematic in that they can potentially distract the player's attention, adversely effect performance, and/or injure a portion of a player's body.

Rigid polymer materials are typically used to provide grips for tools and sports equipment. The use of rigid polymers allows users to maintain control of the equipment but is not very effective at reducing vibrations. While it is known that softer materials provide better vibration regulation characteristics, such materials do not have the necessary rigidity for incorporation into sporting equipment, hand tools, shoes or the like. This lack of rigidity allows unintended movement of the equipment encased by the soft material relative to a user's hand or body.
Prolonged or repetitive contact with excessive vibrations can injure a person. The desire to avoid such injury can result in reduced athletic performance and decreased efficiency when working with tools.
In the document EP 0374597 A2, a high performance composite hose is disclosed which exhibits a structure consisting of several plies of balanced fabric having a high performance elastomer adhered to the inner and outer surfaces of each fabric ply. Such material can withstand in highly aggressive environments like strong vibrations and provides high rigidity.

In the document WO 91/00966 A1 a gasket that has a body of fiber cloth of which at least one side is coated with a rubber layer penetrating into the cloth is disclosed. Such material is adapted for use in aggressive environments.

Clearly what is needed is a multi-layer material adapted to regulate vibration that provides the necessary rigidity for effective vibration distribution; that can dampen and reduce vibrational energy; and that preferably uses materials having Shore A durometers designed for superior vibration dissipation without compromising a person's ability to manipulate an object incorporating the material.

SUMMARY

One embodiment of the present invention is directed to a material adapted to regulate vibration. The material includes first and second elastomer layers having different softness values relative to one another, wherein the first elastomer layer has a Shore A Durometer of between ten and twenty-five and the second elastomer layer has a Shore A Durometer of between twenty-five and forty-five, and a cloth layer which is disposed between and generally separates the first and second elastomer layers, thereby causing the material to have three generally distinct and separate layers. The cloth layer is formed of a plurality of woven aramid fibers.

BRIEF DESCRIPTION OF THE DRAWINGS

The foregoing summary, as well as the following detailed description of the preferred embodiments of the present invention will be better understood when read in conjunction with the appended drawings. For the purpose of illustrating the invention, there are shown in the drawings embodiments which are presently preferred. It is understood, however, that the invention is not limited to the precise arrangements and instrumentality shown. In the drawings:

Figure 1 is a cross-sectional view of a preferred embodiment of the material of the present invention; and

Figure 2 is perspective view of the material of Figure 1 configured to form a grip.

DETAILED DESCRIPTION OF THE PREFERRED EMBODIMENTS

Certain terminology is used in the following description for convenience only and is not limiting. The term "implement," as used in the specification and in the claims, means "any one of a baseball bat, racket, hockey stick, softball bat, sporting equipment, firearm, or the like." The above terminology includes the words above specifically mentioned, derivatives thereof, and words of similar import. Additionally, the words "a" and "one" are defined as including one or more of the referenced item unless specifically stated otherwise.

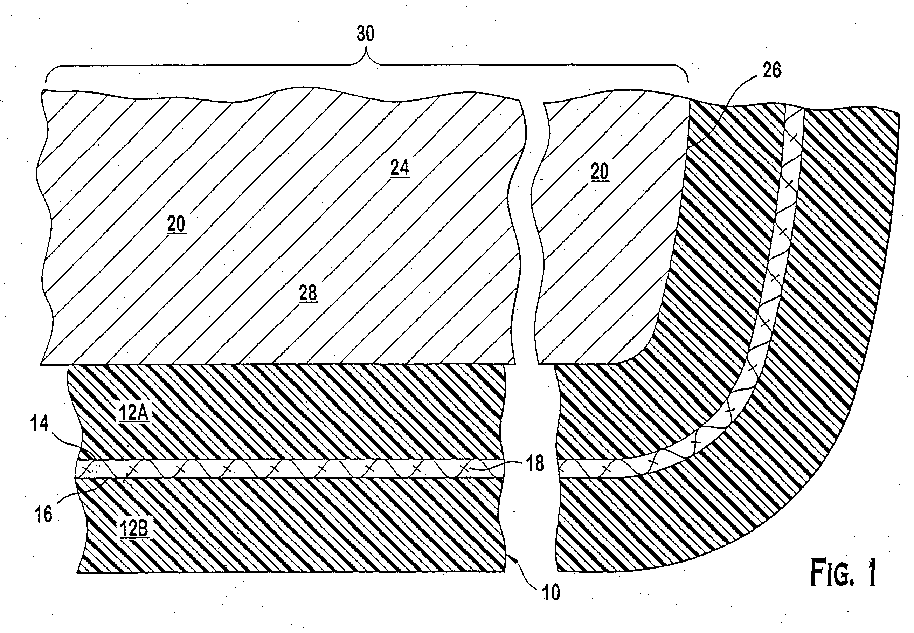

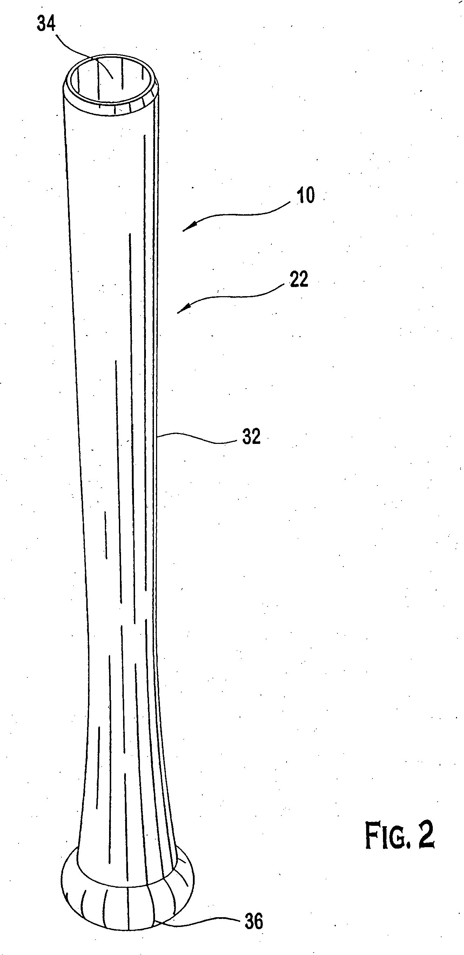

Referring to Figures 1 and 2, wherein like numerals indicate like elements throughout, there is shown a preferred embodiment of a material adapted to regulate vibration according to the present invention, generally designated 10. Briefly stated, the material 10 of the present invention is a multi-layer material comprising a first elastomer layer 12A and a layer of aramid fibers 14. The material 10 can be incorporated into athletic gear, grips for sports equipment, grips for tools, and protective athletic gear. More specifically, the material 10 can be used: to form grips for a tennis racquet, hockey sticks, golf clubs, baseball bats or the like; to form protective athletic gear for mitts, headbands, helmets, gloves, pads, or the like; to form seats or handle bar covers for bicycles, motorcycles, or the like; to form boots for skiing, roller blading or the like; to form footwear, such as shoe soles and inserts; to form grips for firearms, hand guns, rifles, shotguns, or the like; and to form grips for tools such as hammers, drills, circular saws, chisels or the like.

The first elastomer layer 12A acts a shock absorber by converting mechanical vibrational energyinto heat energy. The aramid fiber layer 14 redirects vibrational energy and provides increased stiffness to the material 10 to facilitate a user's ability to control an implement 20 encased, or partially encased, by the material 10.

The composite material 10 has three generally independent and separate layers including the first elastomer layer 12A and a second elastomer layer 12B. Elastomer material provides vibration damping by dissipating vibrational energy. Suitable elastomer materials include, but are not limited, urethane rubbers, silicone rubbers, nitrile rubbers, butyl rubbers, acrylic rubbers, natural rubbers, styrene-butadiene rubbers, and the like. In general, any suitable elastomer material can be used to form the first and second elastomer layers without departing from the scope of the present invention.

The softness of elastomer materials can be quantified using Shore A durometer ratings. Generally speaking, the lower the durometer rating, the softer the material and the more effective an elastomer layer is at absorbing and dissipating vibration because less force is channeled through the elastomer. When a soft elastomer material is squeezed, an individual's fingers are imbedded in the elastomer which increases the surface area of contact between the user's hand and creates irregularities in the outer material surface to allow a user to firmly grasp any implement 20 covered, or partially covered, by the material. However, the softer the elastomer layers 12A, 12B, the less control a user has when manipulating an implement 20 covered by the elastomer. If the elastomer layer is too soft (i.e., if the elastomer layer has too low of a Shore A durometer rating) then the implement 20 may rotate unintentionally relative to a user's hand or foot. The material 10 of the present invention is preferably designed to use first and second elastomer layers 12A, 12B having Shore A durometer ratings that provide an optimum balance between allowing a user to precisely manipulate and control the implement 20 and effectively damping vibration during use of the implement 20.

The first elastomer layer has a Shore A durometer of between ten (10) and twenty-five (25) and the second elastomer layer has a Shore A durometer of between twenty-five (25) and forty-five (45).

The first elastomer layer 12A is preferably used to absorb vibrational energy and to convert vibrational energy into heat energy. The second elastomer layer 12B is also used to absorb vibrational energy, but also provides a compliant and comfortable grip for a user to grasp (or provides a surface for a portion of a user's body, such as the under sole of a user's foot when the material 10 is formed as a shoe insert).

In one embodiment, the first elastomer layer 12A preferably has Shore A durometer of approximately fifteen (15) and the second elastomer layer has a Shore A durometer of approximately forty-two (42).

The fiber layer 14 is formed of aramid fibers. The fibers are woven to form a cloth layer 16 that is disposed between and generally separates the first and second elastomer layers 12A, 12B. The cloth layer 16 generally separates the first and second elastomer layers 12A, 12B causing the material 10 to have three generally distinct and separate layers 12A, 12B, 14. The aramid fiber layer 14 blocks and redirects vibrational energy that passes through one of the elastomer layers 12A or 12B to facilitate the dissipation of vibrations. The aramid fibers 18 redirect vibrational energy along the length of the fibers 18. Thus, since the plurality of aramid fibers 18 are woven to form the cloth layer 16, vibrational energy emanating from the implement 20 that is not absorbed or dissipatedby the first elastomer layer 12A is redistributed evenly along the material 10 by the cloth layer 16 and then further dissipated by the second elastomer layer 12B.

It is preferable that the aramid fibers 18 be formed of a suitable polyamide fiber of high tensile strength with a high resistence to elongation.

However, those of ordinary skill in the art will appreciate from this disclosure that any aramid fiber suitable to channel vibration can be used to form the aramid fiber layer 14 without departing from scope of the present invention. It is preferable that the cloth layer 16 include at least some floating aramid fibers 18.

That is, it is preferable that at least some of the plurality of aramid fibers 18 are able to move relative to the remaining aramid fibers 18 of the cloth layer 16. This movement of some of the aramid fibers 18 allows at least some movement between the first elastomer layer 12A and the second elastomer layer 12B. This movement of the first elastomer layer 12A relative to the second elastomer layer 12B converts vibrational energy to heat energy. Such motion is preferably facilitated by the first and second elastomer layers 12A, 12B only being joined at discreet locations rather than being continuously joined along a common interface. This discrete contact between the first and second elastomer layers 12A, 12B at discreet locations results in the elastomer layers 12A, 12B moving relative to one another and further dissipating vibration.

The material 10 may be configured and adapted to form an insert for shoe. When the material 10 is configured to form a shoe insert, the material 10 is preferably adapted to extend along an inner surface of the shoe from a location proximate to a heel of the shoe to the toe of the shoe. In addition to forming a shoe insert, the material 10 can be located along the sides of a shoe to protect the wearer's foot from lateral impact.

The material 10 may be configured and adapted to form a grip 22 for an implement such as a bat, having a handle 24 and a proximal end 26 (i.e., the end proximal to where the bat is normally gripped). The material 10 is preferably adapted to enclose a portion of the handle 24 and to enclose the proximal end 26 of the bat or implement 20. As best shown in Figure 2, it is preferable that the grip 22 be formed as a single body that completely encloses the proximal end of the implement 20. The material 10 may be also be configured and adapted to form a grip 22 for a tennis racket or similar implement 20 having a handle 24 and a proximal end 26.

While the grip 22 will be described below in connection with a baseball or softball bat, those of ordinary skill in the art will appreciate that the grip 22 can be used with any of the equipment, tools, or devices mentioned above without departing from the scope of the present invention.

When the grip 22 is used with a baseball or softball bat, the grip 22 preferably covers approximately seventeen (17) inches of the handle of the bat as well as covers the knob (i.e., the proximal end 26 of the implement 20) of the bat. The configuration of the grip 22 to extend over a significant portion of the bat length contributes to increased vibrational damping. It is preferred, but not necessary, that the grip 22 be formed as a single, contiguous, one-piece member.

The baseball bat (or implement 20) has a handle 24 including a handle body 28 having a longitudinal portion 30 and a proximal end 26. The material 10 preferably encases at least some of the longitudinal portion 30 and the proximal end 26 of the handle 24. The material 10 is produced as a composite having generally separate and distinct layers including a first elastomer layer 12A and an aramid fiber layer 14 (which is a woven aramid cloth layer 16) disposed on the elastomer layer 12A. The aramid fiber layer 14 is hence formed of woven aramid fibers 18. The second elastomer layer 12B is disposed on a major surface of the aramid fiber layer 14 opposite from the first elastomer layer 12A.

As best shown in Figure 2, a preferred grip 22 is adapted for use with an implement 20 having a handle and a proximal handle end. The grip 22 includes a tubular shell 32 having a distal open end 34 adapted to surround a portion of the handle and a closed proximal end 36 adapted to enclose the proximal end of the handle. The tubular shell 32 is preferably formed of the material 10 which dissipates vibration. The material 10 has generally separate layers including a first elastomer layer 12A and an aramid fiber layer 14 (which fibers 18 are woven to form a cloth layer 16) disposed on the first elastomer layer 12A.

Multiple methods can be used to produce the composite or multi-layer material 10 of the present invention. One method is to extrude the material by pulling an aramid fiber cloth layer 16 from a supply roll while placing the first and second elastomer layers 12A, 12B on both sides of the woven aramid cloth layer 16. A second method of producing the material 10 of the present invention is to mold the first elastomer layer 12A onto the implement 20, then to weave an aramid fiber layer thereover, and then to mold the second elastomer layer 12B thereover.
Alternatively, a cloth layer 16 can be pressured fit to an elastomer layer to form the material 10. Those of ordinary skill in the art will appreciate from this disclosure that any known method of making composite or multi-layer materials can be used to form the material 10.

The covering of the proximal end of an implement 20 by the grip 22 results in reduced vibration transmission and in improved counter balancing of the distal end of the implement 20 by moving the center of mass of the implement 20 closer to the hand of a user (i. e. , closer to the proximal end 26). This facilitates the swinging of the implement 20 and can improve sports performance while reducing the fatigue associated with repetitive motion.

It is recognized by those skilled in the art, that changes may be made to the above-described embodiments of the invention without departing from the broad inventive concept thereof. For example, the material 10 may include additional layers (e. g. , five or more layers) without departing from the scope of the claimed present invention. It is understood, therefore, that this invention is not limited to the particular embodiments disclosed, but is intended to cover all modifications which are within the scope of the invention as defined by the appended claims.

## Claims

1. A material (10) adapted to regulate vibration, comprising:
first and second elastomer layers (12A, 12B) having different softness values relative to one another, wherein the first elastomer layer (12A) has a Shore A Durometer of between ten (10) and twenty-five (25) and the second elastomer layer (12B) has a Shore A Durometer of between twenty-five (25) and forty-five (45); and
a cloth layer (16) disposed between and generally separating the first and second elastomer layers (12A, 12B) and thereby causing the material (10) to have three generally distinct and separate layers, the cloth layer (16) being formed of a plurality of woven aramid fibers (18).

2. The material (10) of claim 1, wherein the first elastomer layer (12A) has a Shore A Durometer of approximately fifteen (15) and the second elastomer layer (12B) has a Shore A Durometer of approximately forty-two (42).

3. Use of the material (10) of claim 1 in a grip (22) for a bat having a handle (24) and a proximal end (26), wherein the material (10) encloses a portion of the handle (24) and encloses the proximal end (26) of the bat.

4. Use of the material (10) of claim 1 in a grip (22) for a tennis racquet having a handle (24) and a proximal end (26), wherein the material (10) encloses a portion of the handle (24) and encloses the proximal end (26) of the tennis racquet.

5. Use of the material (10) of claim 1 in a grip (22) for an implement (20) having a handle (24) and a proximal end (26), wherein the material (10) encloses a portion of the handle (24) and encloses the proximal end (26) of the implement (20).

6. Use of the material (10) of claim 1 in an insert for a shoe, wherein the insert extends along an inner surface of the shoe from a location proximate to a heel of the shoe to a toe of the shoe.

7. The material (10) of claim 1, wherein the cloth layer (16) includes at least some floating aramid fibers (18).

8. The material (10) of claim 1, wherein at least some of the plurality of aramid fibers (18) can move relative to the remaining aramid fibers (18) of the cloth layer (16).

9. The material (10) of claim 8, wherein the first and second elastomer layers (12A, 12B) are joined to one another only at discrete locations.

10. The material (10) of claim 1, wherein at least a portion of the first elastomer layer (12A) is moveable relative to the second elastomer layer (12B) to convert vibrational energy to heat energy.

## Patentansprüche

1. Material (10), das für die Regulierung von Vibrationen angepasst ist, umfassend : eine erste und eine zweite Elastomerschicht (12A, 12B) mit voneinander unterschiedlichen Härtegraden, wobei die erste Elastomerschicht (12A) einen Härtegrad Durometer Shore A zwischen zehn (10) und fünfundzwanzig (25) und die zweite Elastomerschicht (12B) einen Härtegrad Durometer Shore A zwischen fünfundzwanzig (25) und fünfundvierzig (45) aufweist; und
eine Gewebeschicht (16), die zwischen der ersten und der zweiten Elastomerschicht (12A, 12B) angeordnet ist und diese allgemein trennt und dadurch bewirkt, dass das Material (10) drei allgemein unterschiedliche und separate Schichten umfasst, wobei die Gewebeschicht (16) aus einer Vielzahl von gewebten Aramidfasern (18) gebildet ist.

2. Material (10) nach Anspruch 1, wobei die erste Elastomerschicht (12A) einen Härtegrad Durometer Shore A von circa fünfzehn (15) und die zweite Elastomerschicht (12B) einen Härtegrad Durometer Shore A von circa zweiundvierzig (42) aufweist.

3. Verwendung des Materials (10) bei einem Griff (22) für einen Schläger, der einen Stiel (24) und ein proximales Ende (26) hat, wobei das Material einen Teil des Stiels (24) umschließt und das proximale Ende (26) des Schlägers umschließt.

4. Verwendung des Materials (10) bei einem Griff (22) für einen Tennisschläger, der einen Stiel (24) und ein proximales Ende (26) hat, wobei das Material einen Teil des Stiels (24) und das proximale Ende (26) des Tennisschlägers umschließt.

5. Verwendung des Materials (10) bei einem Griff (22) für ein Instrument, das einen Stiel (24) und ein proximales Ende (26) hat, wobei das Material einen Teil des Stiels (24) und das proximale Ende (26) des Instruments umschließt.

6. Verwendung des Materials (10) in einer Schuheinlage, wobei sich die Einlage entlang der Innenfläche des Schuhs von einem Ort nahe an der Ferse des Schuhs bis zu einer Spitze des Schuhs erstreckt.

7. Material (10) nach Anspruch 1, wobei die Gewebeschicht (16) zumindest einige freie Aramidfasern (18) enthält.

8. Material (10) nach Anspruch 1, wobei zumindest einige der Vielzahl von Aramidfasern (18) sich relativ zu den restlichen Aramidfasern (18) der Gewebeschicht (16) bewegen können.

9. Material (10) nach Anspruch 8, wobei die erste und die zweite Elastomerschicht (12A, 12B) an diskreten Stellen miteinander verbunden sind.

10. Material (10) nach Anspruch 1, wobei zumindest ein Teil der ersten Elastomerschicht (12A) relativ zur zweiten Elastomerschicht (12B) beweglich ist, um Vibrationsenergie in Wärmeenergie umzuwandeln.

## Revendications

1. Matériau (10) conçu pour réguler des vibrations, comprenant :
une première et une deuxième couche élastomère (12A, 12B) présentantes des valeurs de mollesse différentes l'une par rapport à l'autre, dans lesquelles la première couche élastomère (12A) a un duromètre Shore A d'entre dix (10) et vingt-cinq (25) et la deuxième couche (12B) a un duromètre Shore A d'entre vingt-cinq (25) et quarante-cinq (45) ; et une couche tissu (16) disposée entre et généralement séparant a première et la deuxième couche élastomère (12A,12B) et ainsi causant le matériau (10) à comporter trois couches généralement distinctes et séparées, la couche tissu (16) étant formée d'une pluralité de fibres d'aramide tissées (18).

2. Matériau (10) selon la revendication 1, dans lequel la première couche élastomère (12A) a un duromètre Shore A d'environ quinze (15) et la deuxième couche (12B) a un duromètre Shore A d'environ quarante-deux (42).

3. L'usage du matériau (10) selon la revendication 1 dans une poignée (22) pour une raquette comprenant un manche (24) et une extrémité proximale (26), dans lequel le matériau (10) environne une partie du manche (24) et environne l'extrémité proximale (26) de la raquette.

4. L'usage du matériau (10) selon la revendication 1 dans une poignée (22) pour une raquette de tennis comprenant un manche (24) et une extrémité proximale (26), dans lequel le matériau (10) environne une partie du manche (24) et environne l'extrémité proximale (26) de la raquette de tennis.

5. L'usage du matériau (10) selon la revendication 1 dans une poignée (22) pour un instrument (20) comprenant un manche (24) et une extrémité proximale (26), dans lequel le matériau (10) environne une partie du manche (24) et environne l'extrémité proximale (26) de l'instrument (20).

6. L'usage de matériau (10) selon la revendication 1 dans un insert d'une chaussure, insert qui s'étend le long d'une surface intérieure de la chaussure d'un local proximal au talon de la chaussure jusqu'au bout de la chaussure.

7. Matériau (10) selon la revendication 1, dans lequel la couche tissu (16) comprend au moins quelques fibres flottantes d'aramide (18).

8. Matériau (10) selon la revendication 1, dans lequel au moins quelques de la pluralité de fibres d'aramide (18) peuvent se mouvoir par rapport aux fibres d'aramide (18) restantes de la couche tissu (16).

9. Matériau (10) selon la revendication 8, dans lequel la première et la deuxième couche (12A, 12B) sont reliées l'une à l'autre seulement à des endroits discrets.

10. Matériau (10) selon la revendication 1, dans lequel au moins une partie de la première couche élastomère (12A) est mobile par rapport à la deuxième couche élastomère (12B), pour la conversion d'énergie vibratoire en énergie calorifique.
